Europäisches Patentamt

European Patent Office

Office européen des brevets

(19)

(11) Publication number: **0 030 623**
B1

(12) # EUROPEAN PATENT SPECIFICATION

(45) Date of publication of patent specification: **22.02.84**

(21) Application number: **80107017.8**

(22) Date of filing: **14.11.80**

(51) Int. Cl.³: **G 11 B 5/84,** G 11 B 17/02, G 11 B 5/70

(54) **Methods of fabricating magnetic records, magnetic records so fabricated, and magnetic recording and reproducing apparatus comprising such fabricated magnetic records.**

(30) Priority: **10.12.79 US 102161**
**10.12.79 US 102166**

(43) Date of publication of application:
**24.06.81 Bulletin 81/25**

(45) Publication of the grant of the patent:
**22.02.84 Bulletin 84/8**

(84) Designated Contracting States:
**DE FR GB**

(56) References cited:
**US - A - 3 359 549**
**US - A - 3 373 413**
**US - A - 3 480 964**

(73) Proprietor: **International Business Machines Corporation**
**Old Orchard Road**
**Armonk, N.Y. 10504 (US)**

(72) Inventor: **Gruss, Edward George**
**2291 Central Park Drive**
**Campbell California 95008 (US)**
Inventor: **Tietze, Armin Rudolf**
**20421 Hunters Hill Road**
**San Jose California 95120 (US)**
Inventor: **Denner, Horst Bernhard Wilhelm**
**1773 Michon Drive**
**San Jose California 95124 (US)**

(74) Representative: **Lewis, Alan John**
**IBM United Kingdom Patent Operations Hursley Park**
**Winchester, Hants, S021 2JN (GB)**

Courier Press, Leamington Spa, England.

## Methods of frabricating magnetic records, magnetic records so fabricated, and magnetic recording and reproducing apparatus comprising such fabricated magnetic records

The invention relates to methods of fabricating magnetic records, magnetic records so fabricated, and magnetic recording and reproducing apparatus comprising such fabricated magnetic records.

In magnetic recording, the use of disks having either particulate or thin film magnetic coatings thereon is well known. Each of these types of coatings has problems associated therewith which render them less than totally desirable, particularly for extremely thin coatings which are required for the high bit density recording patterns being used now and in the future.

Particulate coatings on aluminium substrates, especially in extremely thin layers, often exhibit limited durability with respect to contact with the magnetic transducer associated with the disk. The film disks, usually produced by sputtering, evaporation or electroplating of a magnetic coating, generally provide magnetic coatings which are thinner than those available with particulate coatings. However, thin film disks often exhibit significant corrosion problems, primarily because of the reaction between the metal substrate, which has been required to be aluminium because of weight considerations, and the deposited thin film layer, and have required the deposition of protective layers between the substrate and the thin film layer and over the thin film layer. Understandably, the requirement for these protective layers has added significantly to the cost of the thin film disk.

Additionally, both particulate and thin film disks usually have employed a substrate of substantial thickness relative to the coating thickness, thereby adding appreciably to the weight of an assembly which includes several of such disks.

Recording disks of the foil type have been proposed in the past for magnetic recording. Usually such disks have been formed from a plastic substrate coated with magnetic material and arranged to provide some type of compliant surface for interacting with the magnetic transducer.

U.S. Patent 3,373,413 (Treseder), discloses a magnetic recording disc in which a plastic foil member is stretched over a mounting ring by the application of force to its outer edge and is then clamped to the ring. The amount of tension retained in the plastic foil is limited by the nature of the plastics materials. Thus, plastics materials have limited resilience and do not elastically return to their former dimensions following dimensional distortion.

U.S. Patent 3,359,549 (Ferrand et al) shows a magnetic recording device employing thin metal or plastic disks which are tensioned and supported at their periphery and to which access is had by transducers mounted in the central openings of the disks. The disks are pretensioned by stretching the sheet material from which they are to be cut, clamping the stretched material and then trimming the excess material.

U.S. specification No. 3,480,964 (Siler) is entitled "Structure for assemblying annular tensioned recording discs" and discloses two such a structure. One structure comprises a dual disc member. The dual member comprises a T-sectional circumference ring having the stem of the T extending radially outwards and the crosspiece axially. Two band are a press fit over the ring and secure the margins of two parallel webs of sheet recording material to the ring under tension. Of necessity the material is stretched before the bands are pressed on.

In the second structure, the margin of a circular record disc is secured e.g. by bonding between abutting faces of two aligned rings. Siler states that the rings may be compressed before the material of the disc is bonded so that when released, the material is held under tension. No method of compressing the rings is described.

It is an object of the invention to provide an improved method of fabricating a magnetic record comprising a thin tensioned flexible foil having a magnetic recording surface and being secured around its periphery to a ring member and thereby to provide an improved magnetic record.

Accordingly the invention provides a method of fabricating a magnetic record comprising a thin tensioned flexible foil having a magnetic recording surface and being secured around its periphery to a first ring member, said method comprising compressing the first ring member, securing the periphery of the foil member to the compressed ring member and thereafter releasing the compression on the ring member to tension the foil, said method being characterised by the steps of:—

(1) fitting the first ring member inside a second ring member,

(2) positioning the first and second ring members within an outer compression ring having an internal diameter greater than the external diameter of the second ring member,

(3) locating a multiplicity of force transmitting elements to extend radially between the outer compression ring and the second ring member, said elements being closely and uniformly spaced all around the periphery of the second ring member.

(4) applying radially compressive force to the periphery of the second ring member from the outer compression ring at a multiplicity of points spaced around the outer periphery of the second ring member through the radial force transmitting elements, and

(5) after securing the foil member, releasing the compressive force and removing the second ring member.

In one embodiment of the invention, a foil is mounted on a ring in the above manner and is provided with one surface for magnetic recording. Alternatively, both foil surfaces may have magnetic recording material applied thereto. In another embodiment, two foil members are provided with each ring, one attached to the upper surface of the ring and the other to the lower surface. Both sides of each foil are provided with magnetic recording coatings and by providing a central opening in each foil for an access mechanism carrying one or more magnetic transducers, access may be had to information recorded on any of the four recording surfaces of the two foils. Alternatively, only the upper surface of one foil and the lower surface of the other foil is provided with a magnetic coating, and access to these two recording surfaces is had by transducers movable from the outside diameter of the disk toward the inside diameter.

The fabricated foil/ring recording members described may be incorporated into a recording assembly comprised of a plurality of such foil/ring members vertically spaced from each other and serviced by a common access mechanism either through the central openings in the foils or from the outside diameters of the structure.

Magnetic records fabricated in accordance with this invention provide a number of advantages over other devices. By use of thin film magnetic coatings, extremely high bit densities are obtainable, yet the problems of corrosion are eliminated by the use of a corrosion-resistant material for the foil material and by the fact that no corrosion-prone metal substrate is required. Further, because of the thin foils used, the resulting structure is extremely light, even when a number of such foil/ring members are used in a recording assembly, and the recording disk is very durable because of its hardness and the flexibility of the foil. Additionally, devices of the present invention are lower in cost than particulate or thin film disks on aluminium substrates because there is no requirement for expensive grinding or diamond turning of a substrate, and no need for the application of protective corrosion-resistant coatings. A further factor which reduces the cost of the present devices is the ability to fabricate the recording members of this invention, including application of the magnetic coating, in a continuous process.

The invention will now be further described with reference to the accompanying drawings, in which:—

FIG. 1 is a perspective view of a foil member suitable for use in fabricating a magnetic record according to the method of the present invention.

FIGS. 2 and 3 are partial cross sectional view of magnetic records in accordance with this invention;

FIG. 4 is an exploded view illustrating the preferred method of fabrication of a magnetic record in accordance with this invention;

FIG. 5 is a perspective view in cross-section illustrating part of a recorded fabricated in accordance with this invention;

FIG. 6 is a cross-sectional schematic representation of a magnetic recording and reproducing apparatus using a plurality of the records shown in FIG. 5;

FIG. 7 is a cross-sectional representation of another record fabricated in accordance with the invention and employing rings at both the inner and outer diameters of the foil members;

FIG. 8 is a cross-sectional schematic representation of a magnetic recording and reproducing apparatus using a plurality of the records shown in FIG. 7.

FIG. 9 is a perspective view partly in cross-section, illustrating a further record fabricated in accordance with the invention and utilizing a foil member with a central opening and a foil member without such an opening; and

FIG. 10 illustrates another record fabricated in accordance with the invention in which the two foil members have central openings of different diameters and the structure is provided with a combined clamping and spacing element.

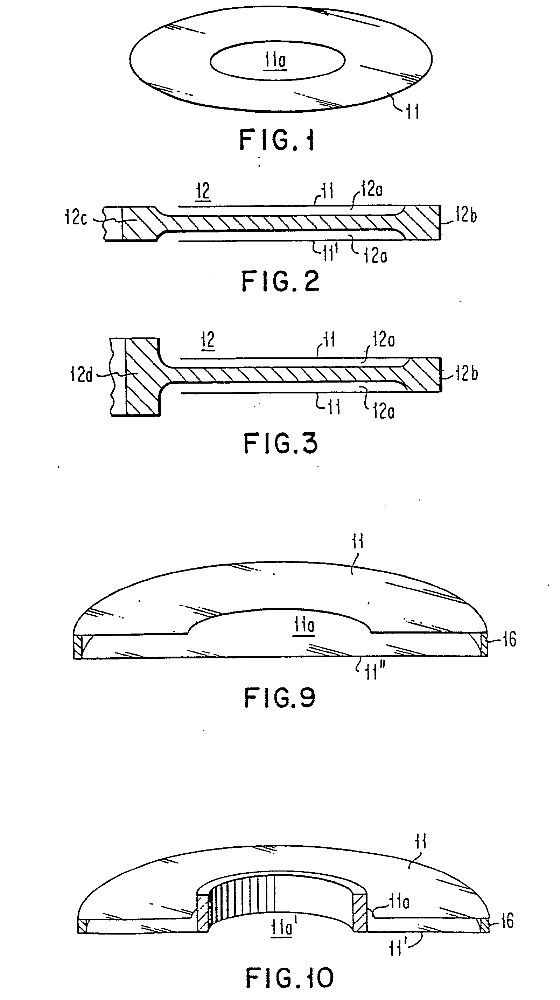

Referring to FIG. 1, there is shown a foil member 11 of a configuration suitable for use in the present invention. Foil 11 is circular in shape and is provided with a central opening 11a. Foil 11 is made of a suitable corrosion-resistant material such as stainless steel, inconel or niotronic foil and preferably has a thickness in the order of 0.1 mm (4.0 mils). The material of foil 12 preferably has a yield strength in excess of $6.89 \times 10^8$ Pascals (100,000 psi). Foil 11 may have applied thereto a magnetic coating prior to being mounted, or such coating may be applied to the foil after fabrication of the record.

Foil 11 is mounted on a suitable support member 12 to form a recording structure. As shown in FIG. 2, support member 12 is in the form of a flat member having portions thereof removed in the regions 12a by machining or the like, leaving a thicker portion 12b at the outside diameter and a thicker portion 12c at the inside diameter. Foil 11 is secured to portion 12b by welding, laser welding, ultrasonic bonding, chemical bonding, or fusion. Foil 11 is thus supported at its periphery on the outside diameter or member 12, leaving foil 11 suspended in tension above the portion 12a of member 12 which has a reduced thickness.

If desired, a similar tensioned foil 11' may be secured to the bottom of portion 12b of member 12, as shown in FIG. 2, to produce a recording structure having two recording surfaces represented by foil members 11 and 11'. In the structure of FIG. 2, inner portion 12c does not support foils 11, 11', and its primary purpose is to provide support for clamping the structure in a recording assembly.

FIG. 3 illustrates an alternate embodiment of the invention using a member 12 having portions of reduced thickness 12a and an outside diameter portion 12b, as in FIG. 2. However, the inner diameter portion 12d of member 12 is thicker than outer diameter portion 12b, and the function of this thicker portion 12d is to serve as a clamping structure and as an integral spacer to properly separate the recording structures when a plurality of them are assembled one above the other in a recording device.

For fabrication foil 11 is placed on a ring 16 which is radially compressible. Ring 16 is preferably, although not necessarily, made of the same material as foil 11 so as to provide compatibility for welding of the foil to the ring, and common thermal coefficients of expansion, corrosion resistance and high yield and structural strength. Ring 16 is radially compressible by suitable means such as a compression ring 13 inside which ring 16 is adapted to fit and which is compressed by a compression ring 14 which fits around ring 13. Ring 14 may provide compressive force by means of a plurality of screws 14a uniformly spaced around the periphery of ring 14 and threadable through openings therein to provide compressive pressure at a plurality of points on the outside of ring 13. As screws 14a are tightened, the compressive pressure from these screws on ring 13 is transformed into a uniform radial compressive pressure of ring 13 on ring 16, thereby uniformly compressing ring 16. As an alternative to the use of screws 14a, the compressive force may be supplied by means of an eccentric C clamp, hydraulic pressure or other suitable means.

After the desired degree of compression of ring 16 has been produced by tightening of screws 14a, foil 11 is placed on ring 16 and secured thereto by suitable means such as welding, spot welding, laser welding, ultrasonic bonding or fusion, as represented by dashed line 11b. Preferably, during fastening of foil 11 to ring 12, foil 11 is essentially tension-free.

Screws 14a may then be withdrawn from ring 14 to release the pressure on ring 13 and hence on ring 16. Ring 16 thereupon expands toward its original size, thereby elongating and tensioning foil 11. Preferably, the amount of elastic elongation of foil 11 is sufficient to result in a recording structure having high impact and damage resistance and low microcreep.

In practice, we have employed ring 16 having cross sectional areas between $0.194 \times 10^{-4}$ and $0.323 \times 10^{-4}$ m² (0.03 and 0.05 in²) for a 35.56 cms (14 inch) diameter foil of 0.1 mm (4 mil) thickness. These rings have been compressed in diameter by about 0.2% under a compressive force of approximately $1.38 \times 10^8$ Pascals (20,000 psi). Upon release of the compressive force, the ring expanded to a diameter which is 0.13% less than its original uncompressed diameter.

If desired, the recording structure formed as described above may be used by arranging to rotate the structure, preferably by driving it by means of ring 16, past an associated transducer mechanism for recording on and reproducing from the magnetic coating on foil 11. Such transducer mechanism may be disposed in the space formed by the opening 11a of foil 11 so as to access the recording surface from the inside diameter of the disk.

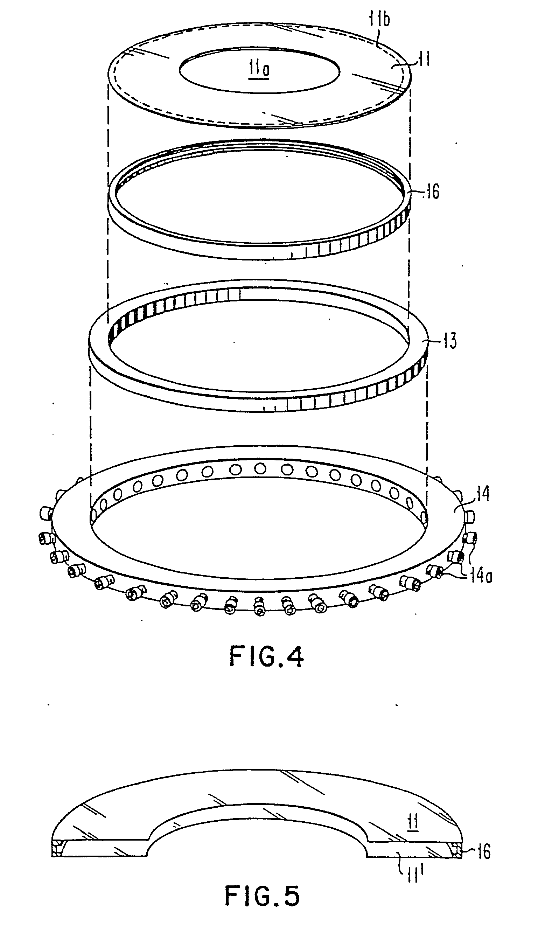

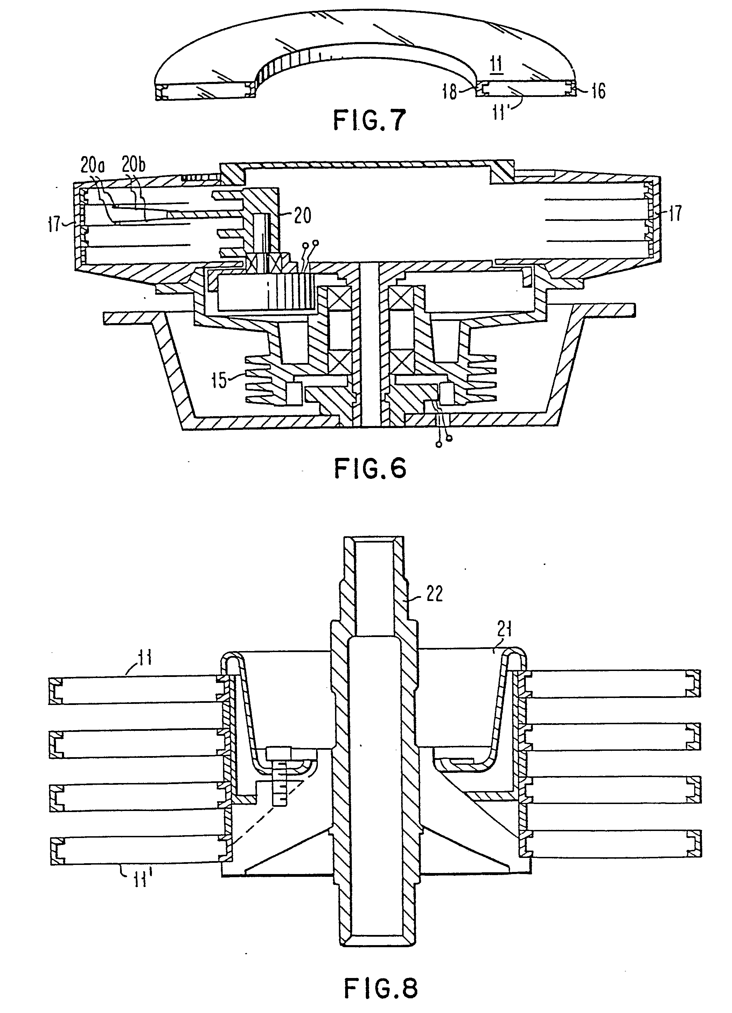

In an alternate embodiment illustrated in FIG. 5, a foil member is provided on both the top and bottom surfaces of ring 16. These foil members, identified in FIG. 5 as 11 and 11', may be mounted on ring 16 as described above, by radially compressing ring 16, securing foil members 11 and 11' thereto at the periphery of the foils, and releasing the compression of ring 16 to tension foil members 11 and 11'. By providing magnetic coatings on both the top and bottom surfaces of foils 11, 11', a total of four recording surfaces are available from the two foil members, and these four surfaces may be accessed by an access mechanism disposed in the space formed by openings 11a, 11'a, as shown in FIG. 6.

FIG. 6 illustrates how the structure shown in FIG. 5 may be utilized in a magnetic recording assembly. A plurality of the structures are mounted in an enclosure having a wall 17 to which the recording structures are secured. A motor 15 is connected to wall 17 to rotate it and the connected recording structures. A rotary actuator mechanism 20 is mounted in the space represented by openings 11a, 11'a of the foil members and carries a plurality of transducers 20a on arms 20b, one of which is associated with each of the recording surfaces of foil members 11, 11'. Rotary motion of actuator 20 causes transducers 20a to be located adjacent different tracks on the recording surfaces for recording or reproducing information.

FIG. 7 illustrates an alternate embodiment of the invention in which both an outside diameter ring 16 is employed, as before, and an inside diameter ring 18 is also used. The structure is fabricated as before by radially compressing ring 16 to the desired extent. Foil members 11, 11' are then secured to the outer edges of both rings 16 and 18 to thus secure the foil members of both their outside and inside diameters. The compression of ring 16 is then released to tension the foil members as before. It will be understood from FIG. 7 that with the use of both inner ring 18 and outer ring 16, only the top surface of foil member 11 and the bottom surface of member 11' will be usable for magnetic recording. The primary purpose of using inner ring 18 is to provide means for clamping the record at its inside diameter.

FIG. 8 illustrates how the structure shown in FIG. 7 may be assembled into a magnetic recording assembly. A plurality of the structures of FIG. 7, including foil members 11, 11', outer ring 16 and inner ring 18 are mounted in spaced relation on a clamping mechanism 21 which in turn is connected to a rotatable shaft 22. As shaft 22 rotates, the recording assemblies also rotate and may be accessed by one or more access mechanisms moving between the recording assemblies from their outside diameter.

FIG. 9 illustrates another embodiment including a foil member 11 having a central opening 11a therein and secured at its outer diameter to ring member 16. The bottom foil member 11″ is not provided with a central opening, but instead is a solid foil member secured at its periphery to the lower surface of ring 16. One or both surfaces of foil members 11, 11″ may be provided with magnetic recording surfaces, as described above. Foil member 11″ may be attached to a spindle or other source of rotation to provide a means to couple the recording structure for rotation. The structure of FIG. 9 could represent the bottom element of a recording structure, with additional structures such as shown in FIG. 5 mounted above it, with suitable spacing members separating the different recording structures.

FIG. 10 shows an additional embodiment of the invention employing an upper foil member 11 secured at its periphery to ring 16 and having a central opening 11a. Lower foil member 11′ has a central opening 11a′ which is smaller in diameter than opening 11a in foil member 11. A combined clamping ring and spacing member 11c may be secured to lower foil member and extend up through opening 11a in foil member 11. Member 11c thus provides the dual function of clamping the recording structure for the transmission of rotational force thereto and acting as a spacer member to separate the recording structure shown in FIG. 10 from an adjacent structure in a recording assembly.

## Claims

1. A method of fabricating a magnetic record comprising a thin tensioned flexible foil (11) having a magnetic recording surface and being secured around its periphery to a first ring member (16), said method comprising compressing the first ring member (16), securing the periphery of the foil member (11) to the compressed ring member and thereafter releasing the compression on the ring member (16) to tension the foil, said method being characterised by the steps of:—

(1) fitting the first ring member (16) inside a second ring member (13),

(2) positioning the first and second ring members within an outer compression ring (14) having an internal diameter greater than the external diameter of the second ring member (13).

(3) locating a multiplicity of force transmitting elements (14a) to extend radially between the outer compression ring (14) and the second ring member (13), said elements being closely and uniformly spaced all around the periphery of the second ring member,

(4) applying radially compressive force to the periphery of the second ring member (13) from the outer compression ring (14) at a multiplicity of points spaced around the outer periphery of the second ring member through the radial force transmitting elements (14a), and

(5) after securing the foil member (11), releasing the compressive force and removing the second ring member (13).

2. A method as claimed in claim 1, further characterised in that the outer compression ring comprises a ring element having a multiplicity of radially arranged elongate elements threaded therethrough and in that the radially compressive force is applied to the second ring member by screwing the threaded elements inwardly of the ring element.

3. A magnetic record fabricated by a method as claimed in claim 1 or 2, characterised in that the foil is formed of a sheet of thin flexible, corrosion-resistant metal having a magnetic coating on one or both sides and having a yield strength in excess of $6.89 \times 10^8$ Pascals.

4. A magnetic record as claimed in claim 3, further characterised in that the first ring member is provided by the peripheral rim or margin of an annular plate (12) having an annular recess (12a) underlying the foil (11), the inner margin (12c, 12d) of the plate forming a hub.

5. A magnetic record as claimed in claim 3, further characterised in that the first ring member is provided by a U-shaped ring element and in that the foil is secured to a side flange of the ring element.

6. Magnetic recording and reproducing apparatus comprising a cylindrical record support unit, a plurality of records supported thereon, and means for rotating the unit to carry records supported thereby past an associated magnetic transducing assembly, said apparatus being characterised in that the records are each fabricated by a method as claimed in claim 1.

## Revendications

1. Procédé de fabrication de disques magnétiques comportant une mince feuille magnétique souple et tendue (11) possédant une surface d'enregistrement magnétique et fixée à sa périphérie à un premier élément annulaire (16), ledit procédé consistant notamment à comprimer le premier élément annulaire (16), à fixer la périphérie de la feuille métallique (11) à l'élément annulaire comprimé, puis à cesser de comprimer ce dernier de manière à tendre ladite feuille, ledit procédé étant caractérisé en ce qu'il comprend les étapes suivantes:

(1) mettre en place le premier élément annulaire (16) à l'intérieur d'un second élément annulaire (13),

(2) positionner les premier et second éléments annulaires à l'intérieur d'un anneau de compression externe (14) dont le diamètre interne est supérieur au diamètre externe du second élément annulaire (13),

(3) disposer plusieurs éléments de transmission de force (14a) de telle sorte qu'ils s'étendent radialement entre l'anneau de compression externe (14) et le second élément annulaire (13), lesdits éléments étant très rapprochés les uns des autres et séparés par une distance uniforme à la périphérie du second élément annulaire,

(4) appliquer radialement une force de compression à la périphérie du second élément annulaire (13) depuis l'anneau de compression externe (14) en plusieurs points situés à la périphérie du second élément annulaire par l'intermédiaire des éléments de transmission de force s'étendant radialement (14a), et

(5) après avoir fixé le feuille métallique (11), cesser d'appliquer la force de compression et retire le second élément annulaire (13).

2. Procédé selon la revendication 1, caractérisé en outre en ce que l'anneau de compression externe se compose d'un élément annulaire dans lequel sont vissés plusieurs éléments filetés de forme allongées disposés radialement et en ce que la force de compression radiale est appliquée au second élément annulaire en vissant éléments filetés vers l'intérieur de l'élément annulaire.

3. Disque magnétique fabriqué conformément au procédé de la revendication 1 ou 2, caractérisé en ce que la feuille métallique mince et souple est en métal capable de résister à la corrosion et possède un revêtement magnétique sur ses deux faces ou sur l'une d'elles seulement, sa résistance mécanique étant supérieure à $6,89 \times 10^8$ Pascals.

4. Disque magnétique selon la revendication 3, caractérisé en outre en ce que le premier élément annulaire est constitué par le bord d'une plaque annulaire (12) présentant un évidement annulaire (12a) situé au-dessous de la feuille métallique (11), le bord interne (12c, 12d) de la plaque formant un moyeu.

5. Disque magnétique selon la revendication 3, caractérisé en outre en ce que le premier élément annulaire est pourvu d'un élément annulaire en forme d'U et en ce que la feuille métallique est fixée à un flasque latéral de l'élément annulaire.

6. Dispositif d'enregistrement et de reproduction magnétique comportant un mécanisme cylindrique destiné à soutenir les disques, plusieurs disques ainsi soutenus, et des moyens permettant de mettre ce mécanisme en rotation de manière à mettre les disques qu'il soutient en relation de transduction avec un transducteur magnétique associé, ledit dispositif étant caractérisé en ce que tous les disques sont fabriqués au moyen du procédé de la revendication 1.

## Patentansprüche

1. Verfahren zum Herstellen einer Magnetplatte, welche aus einer dünnen gespannten flexiblen Folie (11) besteht, welche eine magnetische Aufzeichnungsoberfläche aufweist und entlang ihrer Peripherie an einem ersten ringförmigen Körper (16) befestigt ist, wobei bei diesem Verfahren der erste ringförmige Körper (16) zusammengedrückt wird und die Peripherie der Folie (11) an dem zusammengedrückten ringförmigen Körper befestigt wird und anschließend mit dem Zusammendrücken des ringförmigen Körpers (16) aufgehört wird, wodurch die Folie gespannt wird, und wobei dieses Verfahren durch die folgenden Schritte charakterisiert ist:

(1) der erste ringförmige Körper (16) wird innerhalb eines zweiten ringförmigen Körpers (13) eingepaßt,

(2) der erste und der zweite ringförmige Körper werden innerhalb eines äußeren Kompressionsrings (14) positioniert, welcher einen inneren Durchmesser hat, welcher größer ist als der äußere Durchmesser des zweiten ringförmigen Körpers (13),

(3) eine Vielzahl von kraftübertragenden Elementen (14a) wird zwischen dem äußeren Kompressionsring (14) und dem zweiten ringförmigen Körper (13) in radiale Anordnung gebracht, wobei die genannten Elemente in einem geringen, gleichförmigen Abstand voneinander um die ganze Peripherie des zweiten ringförmigen Körpers herum angeordnet sind,

(4) eine radial wirkende zusammendrückende Kraft wird auf die Peripherie des zweiten ringförmigen Körpers (13) von dem äußeren Kompressionsring (14) an einer Vielzahl von Punkten, welche entlang der äußeren Peripherie des zweiten ringförmigen Körpers liegen, mittels der kraftübertragenden Elemente (14a) ausgeübt, und nachdem die Folie (11) befestigt ist, wird mit dem Zusammendrücken aufgehört und der zweite ringförmige Körper (13) entfernt.

2. Verfahren nach Anspruch 1, welcher weiter dadurch gekennzeichnet ist, daß der äußere Kompressionsring aus einem Ringelement besteht, welches eine Vielzahl von radial angeordneten länglichen durch den äußeren Kompressionsring hindurchgeschraubten Elementen aufweist und daß die radial wirkende Kompressionskraft auf den zweiten ringförmigen Körper ausgeübt wird, indem die hindurchgeschraubten Elemente in Richtung auf den Mittelpunkt des Ringelements geschraubt werden.

3. Eine Magnetplatte hergestellt nach einem Verfahren gemäß dem Anspruch 1 oder 2, dadurch gekennzeichnet, daß die Folie aus einem Blatt aus einem dünnen flexiblen korrosionsbeständigen Metall gebildet ist und ein- oder zweiseitig eine magnetische Beschichtung aufweist, und eine Streckgrenze von $> 6,89 \times 10^8$ Pascal aufweist.

4. Eine Magnetplatte gemäß Anspruch 3, welche weiter dadurch charakterisiert ist, daß der erste ringförmige Ringkörper aus dem peripheren Rand einer ringförmigen Platte (12) gebildet wird, welche einen ringförmigen Absatz (12a), welcher unter der Folie (11) liegt, hat, wobei der innere Rand (12c, 12d) der Platte eine Nabe bildet.

5. Magnetplatte gemäß Anspruch 3, welche weiter dadurch gekennzeichnet ist, daß der erste ringförmige Körper aus einem U-förmigen Ringelement besteht, und daß die Folie an einem Seitenflansch des Ringelements befestigt ist.

6. Magnetische Aufzeichnungs- und Wiedergabevorrichtung, welche aus einer zylindrischen Plattenunterstützungseinheit, einer Vielzahl von damit unterstützten Platten und aus Mitteln zum Rotieren der Einheit bestehen, um die damit unterstützten Platten unter einer zugehörigen magnetischen Übertragungseinheit hindurchzutransportieren, wobei diese Vorrichtung dadurch charakterisiert ist, daß alle Platten mittels eines Verfahrens gemäß dem Patentanspruch 1 hergestellt worden sind.

FIG.1

FIG.2

FIG.3

FIG.9

FIG.10

FIG.4

FIG.5

FIG.7

FIG.6

FIG.8